# EUROPEAN PATENT APPLICATION

(11) **EP 2 169 639 A1**
(43) Date of publication of application: **31.03.2010**
(21) Application number: 09002740.0
(22) Date of filing: 26.02.2009
(51) Int. Cl.: G07F 7/10

(54) **Portable electronic device and data processing method in portable electronic device**

(30) Priority: 18.09.2008 JP 2008239972
(71) Applicant: Kabushiki Kaisha Toshiba, Minato-ku, Tokyo 105-8001 (JP)
(72) Inventor: Nishimura, Saori, Tokyo 105-8001 (JP)
(74) Representative: HOFFMANN EITLE

(57) **Abstract**

In an IC card (1) that stores a data file in which data of a record unit is stored in a data memory (22), it is determined whether a record that is requested to be accessed is shared data or not when a command that requests access to a specified record stored in the data memory (22) is received from a reader/writer. If it is determined in the above determination step that the record specified by the command is shared data, data of a shared destination specified by data of the record is accessed as data of the record.

## Description

This invention relates to a portable electronic device such as an IC card (a smartcard) that contains an integrated circuit (IC) chip having a writable or rewritable nonvolatile memory and CPU and performs various processes based on commands supplied from the exterior and a data processing method in the portable electronic device.

Recently, IC cards used as portable electronic devices have become widespread. The IC card contains an IC chip having a CPU, various memories and communication interfaces. The IC card can process a large amount of data in comparison with a magnetic card having only a magnetic stripe as a data recording unit. Therefore, various operating configurations in which one IC card can be used for a plurality of services (for example, for a cash card, ID card, prepaid card and point card) can be realized. In the above IC card, various data items used in various services are held as applications corresponding to the respective services. In other words, the IC card can be used for a plurality of services by holding a plurality of applications.

For example, the technique for storing data items of the above applications in a data memory of the IC card in a file form is described in Jpn. Pat. Appln. KOKAI Publication No. H3-224047. In the data memory of the IC card, various files corresponding to a plurality of applications are stored. The respective files in the data memory are specified based on identification information of the application or the like. That is, an external device requests access to the specified file with respect to the IC card by specifying identification information of the application.

The specifications of the applications are different from one another. However, many cases in which the same data is required in each application may often occur. It is considered that storage of the same data in a plurality of different applications causes an unfavorable state from the viewpoint of the efficiency of data management (such as the saving of a data area, the efficiency of a data update process, assurance of consistency in specified data items of the respective applications or the like).

An object of this invention is to provide a portable electronic device capable of improving the efficiency of management of data stored in a memory and a data processing method in the portable electronic device.

According to one aspect of the present invention, there is provided a portable electronic device which includes a storage unit which stores a data file having data of a record unit stored therein, a communication unit which communicates data with an external device, a determination unit which determines whether a record that is requested to be accessed is shared data when a command that requests access to a specified record is received via the communication unit, and a processing unit which accesses data of a shared destination of the record based on information indicating the shared destination as data of the record when the determination unit determines that the record specified by the command is shared data.

According to another aspect of the present invention, there is provided a data processing method in a portable electronic device which includes a storage unit which stores data, a communication unit which communicates data with an external device and a control unit which performs a data process, including storing a data file having data of a record unit stored therein in the storage unit, and causing the control unit to determine whether a record that is requested to be accessed is shared data when a command that requests access to a specified record is received via the communication unit and access data of a shared destination of the record based on information indicating the shared destination as data of the record when it is determined in the above determination step that the record specified by the command is shared data.

The invention can be more fully understood from the following detailed description when taken in conjunction with the accompanying drawings, in which:
FIG. 1 is a diagram schematically showing an example of the configuration of a IC card system containing a IC card (portable electronic device) according to one embodiment of this invention.
FIG. 2 is a block diagram schematically showing an example of the hardware configuration of the IC card.
FIG. 3 is a diagram showing an example of the configuration of files stored in a data memory.
FIG. 4 is a diagram showing an example of a memory map in the data memory with respect to the file configuration example shown in FIG. 3.
FIG. 5 is a diagram showing an example of a format in DF definition information.
FIG. 6 is a diagram showing an example of a format in EF definition information.
FIG. 7 is a diagram showing an example of the configuration of a data area of one EF defined by the EF definition information.
FIG. 8A is a diagram showing an example of the configuration of a data area formed of a record R1.
FIG. 8B is a diagram showing an example of the configuration of a data area formed of a record R2.
FIG. 8C is a diagram showing an example of the configuration of a data area formed of a record R3.
FIG. 9 is a diagram showing an example of the configuration of a command (shared data setting command) that requests setting of shared data.
FIG. 10 is a diagram showing an example of a data unit in a shared data setting command.
FIG. 11 is a diagram showing an example of the configuration of response data with respect to a shared data setting command.
FIG. 12 is a diagram showing an example of the configuration of a data area of one EF created by a shared data setting process.
FIG. 13 is a flowchart for illustrating the flow of a process (shared data setting process) when a shared data setting command is received.
FIG. 14 is a flowchart for illustrating the flow of a process (shared data setting process) when a shared data setting command is received.
FIG. 15 is a flowchart for illustrating the flow of a process (read process) when the IC card receives a read command.
FIG. 16 shows an example of a read command.
FIG. 17 is a flowchart for illustrating the flow of a process (rewrite process) when the IC card receives a rewrite command.
FIG. 18 shows an example of a rewrite command.
FIG. 19 is a diagram showing an example of the configuration of a record when the shared destination is specified by use of shared destination information configured by "DF name", "EF-ID" and "record number".
FIG. 20 is a flowchart for illustrating the flow of a process of specifying a record of a shared destination when the state identifier of a to-be-processed record is "shared".

There will now be described embodiments of the present invention with reference to the accompanying drawings.

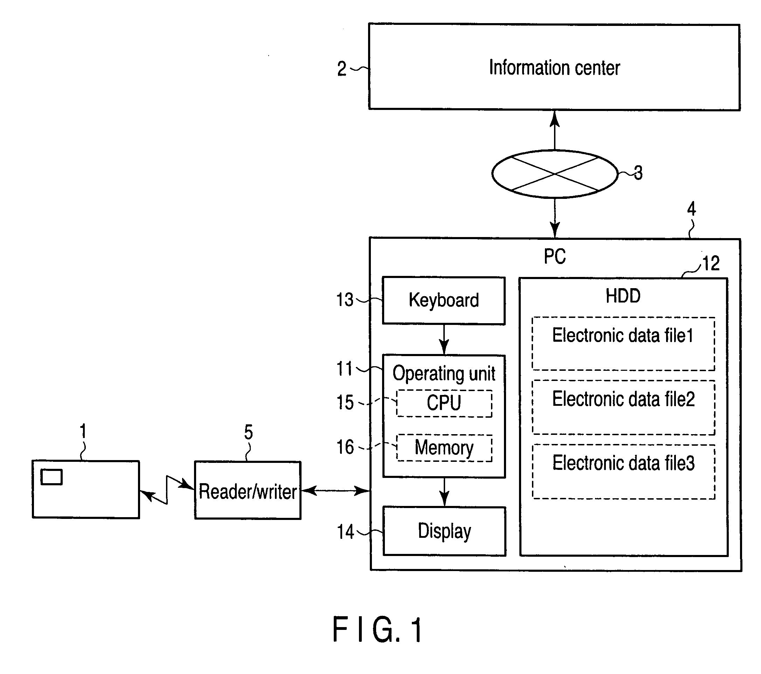

FIG. 1 schematically shows an example of the configuration of an IC card (a smartcard) system containing an IC card (portable electronic device) 1 according to one embodiment of this invention.

As shown in FIG. 1, the present IC card system includes an information center 2, communication network 3, PC 4, reader/writer 5 and the like. The information center 2 is connected to the PC 4 via the communication network 3. The information center 2 is a server device that generally manages data utilized in the present IC card system. In the IC card system, the information center 2 functions as a host device with respect to the PC 4. For example, the communication network 3 is a communication network such as a public telephone network or public radio communication network.

The PC 4 is an electronic computer such as a personal computer. The PC 4 is connected to the reader/writer 5. The PC 4 has a function of transmitting a command to the IC card 1 via the reader/writer 5 and a function of performing various processes based on data received from the IC card 1.

As shown in FIG. 1, the PC 4 includes an operating unit 11, hard disk drive (HDD) 12, keyboard 13 and display 14.

The operating unit 11 has a CPU 15, memory 16 and the like. The CPU 15 is a unit that performs data processes such as operating processes. The CPU 15 performs a data process according to a program. The memory 16 includes a working memory that temporarily stores work data, a program memory in which programs executed by the CPU 15 and control data are stored and the like. With the above configuration, the operating unit 11 causes the CPU 15 to execute the program stored in the memory 16 to realize various processes.

The hard disk drive (HDD) 12 is a rewritable nonvolatile memory with large capacity. The HDD 12 functions as an auxiliary storage device. For example, in the HDD 12, electronic data files 1, 2, 3, ... are stored as secret information. Data of the electronic data files stored in the HDD 12 can be transmitted to the IC card 1 via the reader/writer 5 under the control of the operating unit 11. The keyboard 13 functions as an operating unit operated by an operator of the PC 4. The keyboard 13 is used to permit the operator to input various operating instructions or data. The display 14 is a display device that displays various information items under the control of the PC 4.

The reader/writer 5 is an interface device to communicate with the IC card 1. Further, the reader/writer 5 is an external device having an internal memory and communication control unit (not shown). The reader/writer 5 is configured by an interface corresponding to the communication system of the IC card 1. For example, if the IC card 1 is a contact IC card, the reader/writer 5 includes a contact portion that is physically and electrically connected to the contact portion of the IC card 1. Further, if the IC card 1 is a contactless IC card, the reader/writer 5 includes an antenna and communication control unit used to carry out radio communication with the IC card 1. The reader/writer 5 performs supply of power, supply of clocks, reset control and transmission/reception of data with respect to the IC card 1. The reader/writer 5 having the above functions performs activation (start) of the IC card 1, transmission of various commands and reception of a response to the transmitted command under the control of the PC 4.

Next, an example of the hardware configuration of the IC card 1 is explained.

When receiving power supply from the host device such as the PC 4 via the reader/writer 5, the IC card 1 is activated (set to an operable state). For example, if the IC card 1 has a contact communication function, that is, if the IC card 1 is a contact IC card, the IC card 1 is supplied with the operation power and operation clock from the reader/writer 5 via the contact portion as a communication interface and is activated.

If the IC card 1 has a contactless communication function, that is, if the IC card 1 is a contactless IC card, the IC card 1 receives radio waves from the reader/writer 5 via the antenna and modulation/demodulation circuit as a communication interface, creates operation power and operation clock by means of a power source unit (not shown) based on the radio waves and is activated.

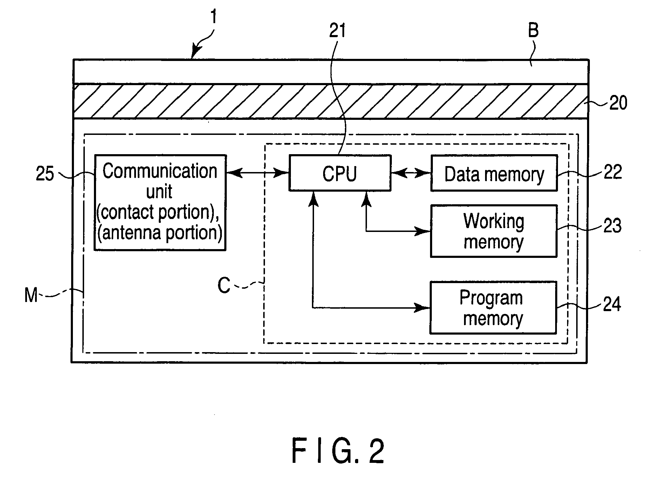

FIG. 2 is a block diagram schematically showing an example of the hardware configuration of the IC card 1 according to this embodiment.

The IC card 1 contains a module M in a casing that configures a main body B. The module M is integrally formed with one or plural IC chips C and a communication external interface (communication unit) connected to each other and is embedded in the main body B of the IC card 1. Further, as shown in FIG. 2, the module M of the IC card 1 includes a CPU (control element) 21, data memory 22, working memory 23, program memory 24 and communication unit 25. In the configuration example of FIG. 2, a magnetic stripe 20 is provided on the main body B.

The control element 21 controls the whole portion of the IC card 1. The CPU 21 is operated based on a control program and control data stored in the program memory 24 and data memory 22 to realize various functions. For example, the CPU 21 executes a program of the operating system to perform a basic operation control process of the IC card 1. Further, the CPU 21 executes an application program corresponding to the purpose of utilization of the IC card 1 to perform various operation control processes corresponding to operational configurations of the IC card 1.

For example, the data memory 22 is configured by a data writable and rewritable nonvolatile memory such as a flash ROM or an electrically erasable programmable read-only memory (EEPROM). Control programs or various data items corresponding to operation applications of the IC card 1 are written to the data memory 22. In the data memory 22, various files corresponding to the specification of the IC card 1 are defined and various data items are written to the above files. An example of the files stored in the data memory 22 is described later.

The working memory 23 is a volatile memory such as a RAM. The working memory 23 also functions as a buffer that temporarily stores data that is now processed by the CPU 21. For example, information indicating the application or a file set in a current state is also stored in the working memory 23.

The program memory 24 is a nonvolatile memory such as a mask ROM in which a control program and control data are previously stored. The program memory 24 is incorporated in the IC card 1 with the control program or control data stored therein at the manufacturing stage of the IC card. The control program or control data stored in the program memory 24 is used to control the basic operation of the IC card and is previously incorporated according to the specification of the IC card 1.

The communication unit 25 is an interface that communicates with the PC 4 via the reader/writer 5. If the IC card 1 is realized as a contact IC card, the communication unit 25 is configured by a communication control unit and contact portion that are physically and electrically connected with the reader/writer 5 to transmit and receive a signal. Further, if the IC card 1 is realized as a contactless IC card, the communication unit 25 is configured by a communication control unit such as a modulation/demodulation circuit that carries out radio communication with the reader/writer 5 and an antenna that transmits and receives radio waves.

Next, the files stored in the data memory 22 are explained.

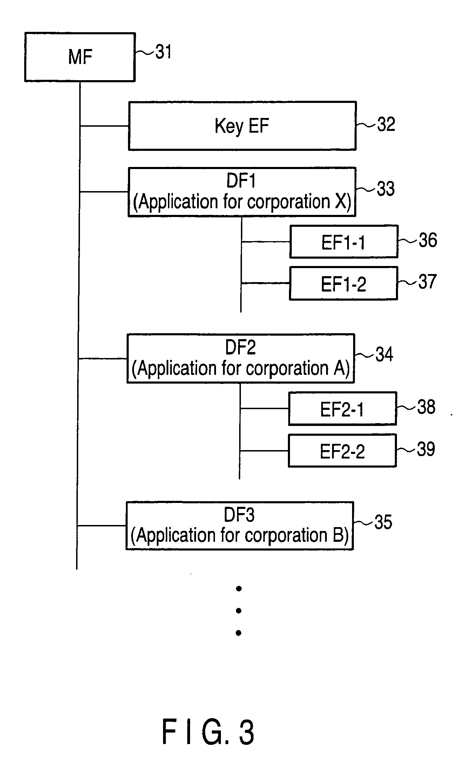

FIG. 3 is a diagram schematically showing an example of the configuration of the files stored in the data memory 22.

In FIG. 3, an example of the configuration of a plurality of files in which information items associated with a plurality of applications are stored is shown. The file configuration shown in FIG. 3 is based on items defined by ISO/IEC7816-4. In the file configuration shown in FIG. 3, various files defined by ISO/IEC7816-4 are managed in a tree structure form.

As shown in FIG. 3, in the data memory 22, a plurality of files having a hierarchical structure formed of a master file (MF), dedicated files (DFs) and elementary files (EFs) are defined. In the example shown in FIG. 3, in a hierarchy next to a master file (MF) 31 of the highest hierarchy, a first EF (key EF) 32, first DF (DF1) 33, second DF (DF2) 34 and third DF (DF3) 35 are provided. As the subordinates of the first DF (DF1) 33, a first EF (EF1-1) 36 of the DF1 and a second EF (EF1-2) 37 of the DF1 are present in the hierarchy next to the DF1. As the subordinates of the second DF (DF2) 34, a first EF (EF2-1) 38 of the DF2 and a second EF (EF2-2) 39 of the DF2 are present in the hierarchy next to the DF2.

The MF 31 is located in the highest position in the file structure for various files stored in the data memory 22. The above DFs (DF1, DF2, DF3) are provided in correspondence to the respective applications. Each DF functions as a folder corresponding to each application. Therefore, DFs of a number corresponding to at least the number of applications are defined in the data memory 22. Each EF is a data file to store actual data. That is, each of the EFs that are the subordinates of the DF stores data used in the application corresponding to the DF. As shown in FIG. 3, the EF can be provided in the hierarchy directly below the MF 31. The key EF 32 shown in FIG. 3 is a data file to store a key (key information) used to set up the access right.

As an example of the application corresponding to the DF, an application for a corporation X, an application for a corporation A and an application for a corporation B are assumed. For example, in the file configuration shown in FIG. 3, it is assumed that the DF1, DF2 and DF3 are respectively provided for the application for corporation X, the application for corporation A and the application for corporation B. In this case, data used in the application for corporation X is stored in EF1-1 and EF1-2 as the subordinates of the DF1. Further, data used in the application for corporation A is stored in EF2-1 and EF2-2 as the subordinates of the DF2.

Next, data management information in the data memory 22 is explained.

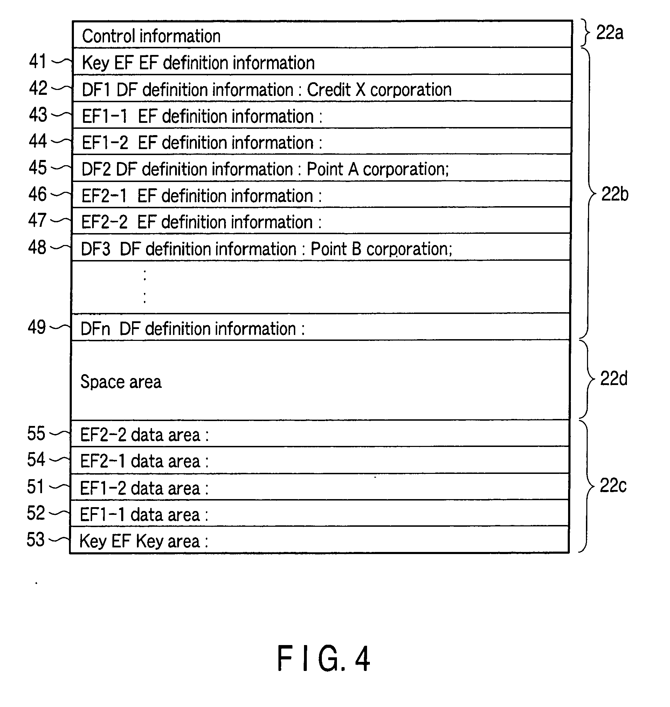

FIG. 4 is a diagram showing an example of a memory map in the data memory 22 with respect to the file configuration example shown in FIG. 3. As shown in FIG. 4, a control region 22a, directory region 22b, area group region 22c and space region 22d are provided in the data memory 22. In the control region 22a, control information to manage data stored in the data memory 22 is stored. In the directory region 22b, definition information of each file (DF and EF) is stored. In the area group region 22c, data areas defined by definition information items of the respective EFs (that is data areas of the respective EFs) are provided. The space region 22d is an unused storage region. The space region 22d is a region adequately used as the directory region 22b or area group region 22c according to addition of a file.

In the example shown in FIG. 4, definition information items 41 to 47 for the key EF, DF1, DF2, DF3, EF1-1, EF1-2, EF2-1, EF2-2 are stored in the directory region 22b. Data areas of the respective EFs defined by definition information items in the directory region 22b are provided in the area group region 22c. Further, the area group region 22c is grouped for each DF to which it belongs.

Next, DF definition information is explained.

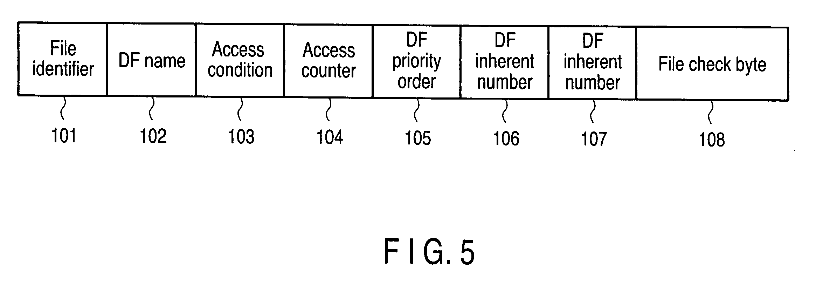

FIG. 5 is a diagram showing an example of the configuration of a format in DF definition information.

As shown in FIG. 5, definition information items (DF definition information items) 42, 45, 48 of the respective DFs are each configured by a file identifier portion 101, DF name portion 102, access conditioning portion 103, access counter portion 104, DF priority setting portion 105, DF inherent number setting portion 106, DF inherent information portion 107 and check byte portion 108.

The file identifier portion 101 stores identification information (DF file identifier) used to identify file types of the DFs. For example, the DF file identifier is information added for each type of a file as the DF. The DF name portion 102 stores DF names added to the respective DFs. For example, the DF name is used as identification information when the user identifies the DF. The access conditioning portion 103 stores information indicating the collation condition. The collation condition is a condition required when access is made to a corresponding DF. The access counter portion 104 stores information indicating the number of accesses to the DF. The number of accesses is counted up each time access is made to a corresponding DF.

The DF priority setting portion 105 stores information indicating the priority order of the corresponding DF in all of the DFs. The priority order is previously set for each DF. The DF inherent number setting portion 106 stores DF inherent numbers attached to the respective DFs. The DF inherent number is number information inherent to each DF created in the IC card 1 when the DF is formed. For example, as the DF inherent numbers, formation numbers attached according to the order of formation of files in all of the DFs can be used. The DF inherent information portion 107 stores information inherent to each DF. The check byte portion 108 stores a file check byte. The file check byte is information to check the validity of data.

Next, EF definition information is explained.

Each file has various file forms corresponding to the structures of data items stored. For example, as the data structure stored in each EF, a binary type (Transparent structure), record type (Record structure) and data object type (Tag Length Value [TLV] structure) are provided. In this embodiment, it is assumed that the EF is mainly a record EF that stores record data. In the record EF, various data items are stored in a record unit. In this case, the explanation is made for the configuration example of definition information of the record EF as an example of the EF definition information.

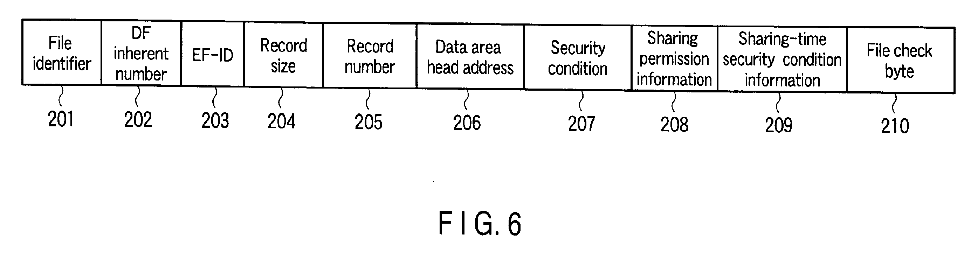

FIG. 6 is a diagram showing an example of a format configuration in the EF definition information.

As shown in FIG. 6, each of the definition information items (EF definition information items) 41, 43, 44, 46, 47 of the respective EFs includes a file identifier portion 201, DF inherent number portion 202, EF-ID portion 203, record size portion 204, record number portion 205, data area head address portion 206, security conditioning portion 207, sharing permission information portion 208, sharing-time security condition information portion 209 and check byte portion 210.

The file identifier portion 201 stores EF identification information (EF file identifier) to identify file types of the EFs. The EF file identifier is unique information for each file type as each EF. The DF inherent number portion 202 stores DF inherent numbers each used to identify a DF to which the EF belongs. The DF inherent number corresponds to a DF inherent number stored in the DF inherent number portion 106 and contained in the DF definition information. The EF-ID portion 203 stores EF-ID as identification information provided to identify the EF. EF-ID is identification information inherent to each EF. The record size portion 204 stores record size information indicating the record size of the EF. The record number portion 205 stores record number information indicating the record number of the EF. The data area head address portion 206 stores a head address of the data area as the EF in the data memory 22.

The security conditioning portion 207 stores a condition (collation condition) required to access the EF. The sharing permission information portion 208 stores information indicating sharing permission or prohibition. The sharing-time security condition information portion 209 stores a condition (collation condition) required for accessing the EF when the EF is shared. The check byte portion 210 stores a file check byte to check the validity of all of data items of the EF.

Next, the record structure of the data area of the EF defined by the above EF definition information is explained.

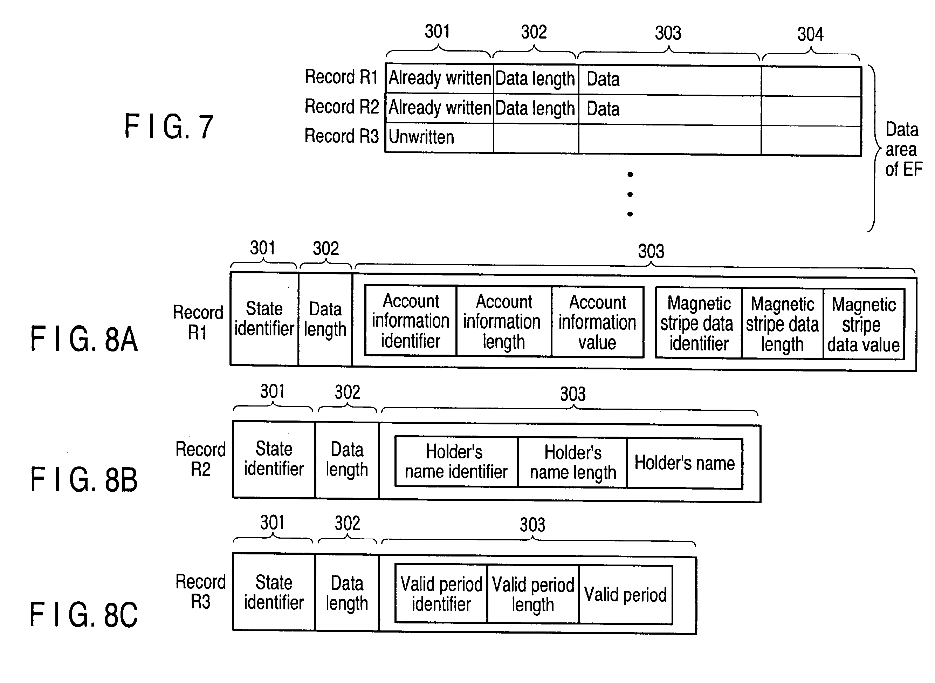

FIG. 7 is a diagram showing an example of the configuration of the data area of one EF defined by the EF definition information.

For example, data areas 51, 52, 54, 55 of EF1-1, EF1-2, EF2-1, EF2-2 have the format configurations as shown in FIG. 7. As shown in FIG. 7, in each EF data area, a data format of a record unit is defined. Thus, a plurality of data items (records) of a record unit can be stored in each EF data area. As shown in FIG. 7, each record includes a state identifier 301, data length 302, data 303 and file check byte 304. In each record, the above data items are sequentially written. For example, the state identifier 301 and data length 302 are written with preset size. The data 303 is data with the length indicated by the data length 302.

The state identifier 301 is information used to identify the state of the record. That is, the state identifier 301 becomes information indicating "unwritten" immediately after the record is formed (initial state). Further, when data is written to the record, the state identifier 301 becomes information indicating "already written". When the record is set to be shared, the state identifier 301 becomes information indicating "shared".

The data length 302 is information indicating the length of the data 303. For example, the data length 302 becomes information indicating zero (0) when the state identifier 301 becomes information indicating "unwritten" (when the data 303 is not present). The data length 302 becomes information indicating the length of the data 303 when the state identifier 301 is "already written". The data length 302 becomes information indicating the length of information indicating a shared destination (link destination) since information indicating the shared destination is stored in the data 303 when the state identifier 301 is "shared".

The data 303 becomes actual data itself in the record when the state identifier 301 is "already written". Further, the data 303 becomes information indicating the shared destination when the state identifier 301 becomes information indicating "shared". As will be described later in detail, the information indicating the shared destination is information indicating the head address of the record of the shared destination or shared destination information used to specify a record of the shared destination, for example.

FIG. 8A is a diagram showing an example of the configuration of a data area formed of a record R1.

FIG. 8B is a diagram showing an example of the configuration of a data area formed of a record R2.

FIG. 8C is a diagram showing an example of the configuration of a data area formed of a record R3.

In the records (R1, R2, R3) shown in FIGS. 8A, 8B and 8C, the state identifier 301 is information indicating "already written" and the data length 302 is information indicting the length of the data 303 following thereafter. Further, in record R1, account information configured by an account information identifier, account information length and account information value and magnetic stripe information configured by a magnetic stripe data identifier, magnetic stripe data length and magnetic stripe data value are stored as the data 303. In record R2, holder's name information configured by a holder's name information identifier, holder's name information length and holder's name is stored as the data 303. In record R3, validity period information configured by a validity period identifier, validity period length and validity period is stored as the data 303.

Next, setting of shared data is explained.

The IC card 1 performs various processes according to commands from the reader/writer 5. For setting of the shared data, the IC card 1 performs a shared data setting process according to an instruction (command) from the reader/writer 5.

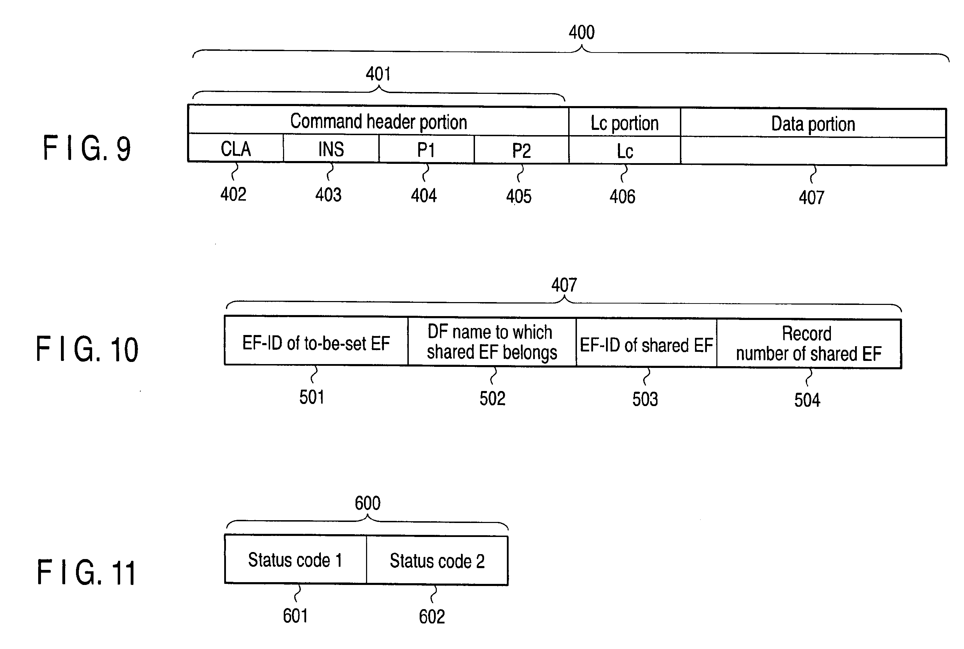

FIG. 9 is a diagram showing an example of the configuration of a command (shared data setting command) that requests setting of shared data.

As shown in FIG. 9, a shared data setting command 400 includes a command header portion 401, Lc portion 406 and data portion 407. Further, the command header portion 401 is configured by a CLA portion 402, INS portion 403, P1 portion 404 and P2 portion 405. The command header portion 401 is configured by information indicating that the command is a command data setting command. In the CLA portion 402 and INS portion 403, information indicating that the type of the command is a shared data setting command is stored and parameters used when the command is executed are stored in the P1 and P2 portions. Information indicating the length of the data portion 407 is stored in the Lc portion.

In the data portion 407, data used to form shared data is stored. FIG. 10 is a diagram showing an example of the data portion 407 in the shared data setting command 400. In the example shown in FIG. 10, "EF-ID of to-be-set EF", "DF name to which shared EF belongs", "EF-ID of shared EF" and "record number of shared EF" are stored in the data portion 407. The above information items are used to specify two records to be shared. In the example shown in FIG. 10, information required for commonly using (linking) a record in an EF belonging to a certain DF (for example, current DF) with a record in an EF belonging to an existing different DF is shown.

In the example shown in FIG. 10, "to-be-set EF" is an EF that stores a record to set sharing. That is, "EF-ID of to-be-set EF" is EF-ID of an EF that stores a record to set sharing. "Shared EF" is an EF that stores a record of a shared destination (that is, a record to which a record used to set the sharing refers). That is, "DF name to which shared EF belongs" is a DF name of a DF to which an EF used to store the record of the shared destination belongs. "EF-ID of shared EF" is EF-ID of an EF used to store the record of the shared destination. "Record number of shared EF" is a record number of the shared destination and indicates a record number in an EF specified by "EF-ID of shared EF".

When receiving the shared data setting command 400 as shown in FIG. 9, the CPU 21 of the IC card 1 determines whether the command is a shared data setting command by means of the command header portion 401. If the CPU 21 of the IC card 1 determines that the received command is a shared data setting command by means of the command header portion 401, it performs a process (shared data setting process) of forming shared data based on information of the data portion 407 in the shared data setting command as shown in FIG. 10. When the shared data setting process is completed, the CPU 21 transmits the result of the process to the reader/writer 5 as a response with respect to the shared data setting command 400.

FIG. 11 is a diagram showing an example of the configuration of response data 600 with respect to the above command. In the example shown in FIG. 11, the response data 600 is configured by a first status code portion 601 and second status code portion 602. For example, information indicating the result of the shared data setting process is stored in the first status code portion 601 and second status code portion 602 in response to the shared data setting command 400. Thus, in the reader/writer 5 of a transmission source of the shared data setting command 400, whether or not the shared data setting process can be successfully performed in the IC card 1 can be determined according to the response data 600.

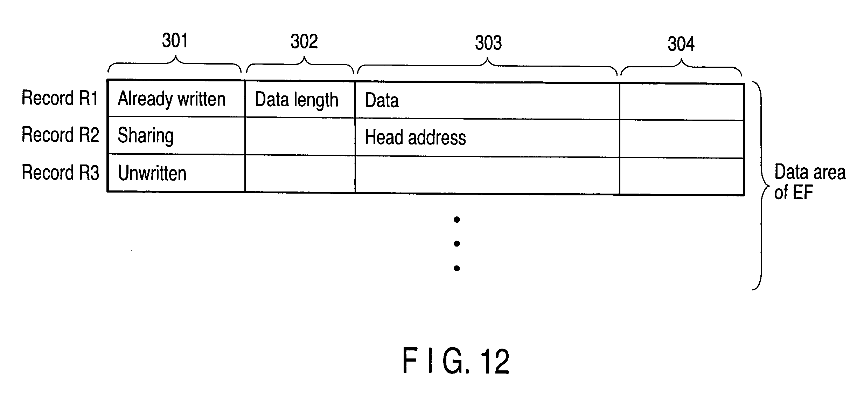

FIG. 12 is a diagram showing an example of the configuration of a data area of one EF created by the shared data setting process.

For example, if the shared data setting process for commonly using record R2 with another record with respect to the data area of the EF shown in FIG. 7 is performed, a data area of the EF is set as shown in FIG. 12. In the example shown in FIG. 12, the state identifier 301 of record R2 is information indicating sharing and head address information of an area of the shared destination is stored as information indicating the shared destination in the data 303. As a result, when access is made to record R2 in the data area of the EF shown in FIG. 12, the CPU 21 determines whether record R2 is shared data based on the state identifier 301. When determining that record R2 is shared data, the CPU 21 refers to address information indicated by the data 303 of record R2 and accesses data of the shared destination as data of record R2.

Next, various processes of the IC card 1 are explained.

The IC card 1 performs various processes according to various commands that request accesses to the respective records in the above data file (EF). The various commands are supplied to the IC card 1 from the external device (reader/writer) 5. For example, the IC card 1 performs a shared data setting process to share a specified record in response to a shared data setting command supplied from the external device (reader/writer) 5. Further, the IC card 1 performs a process of reading data of a record of the shared destination according to a read command that specifies a record set to be shared and supplied from the external device (reader/writer) 5. In addition, the IC card 1 performs a process of rewriting data of a record of the shared destination to data specified by a rewrite command according to the rewrite command of data that specifies a record set to be shared and supplied from the external device (reader/writer) 5.

Next, the shared data setting process, read process and rewrite process in the IC card 1 are explained in detail.

First, the shared data setting process is explained in detail.

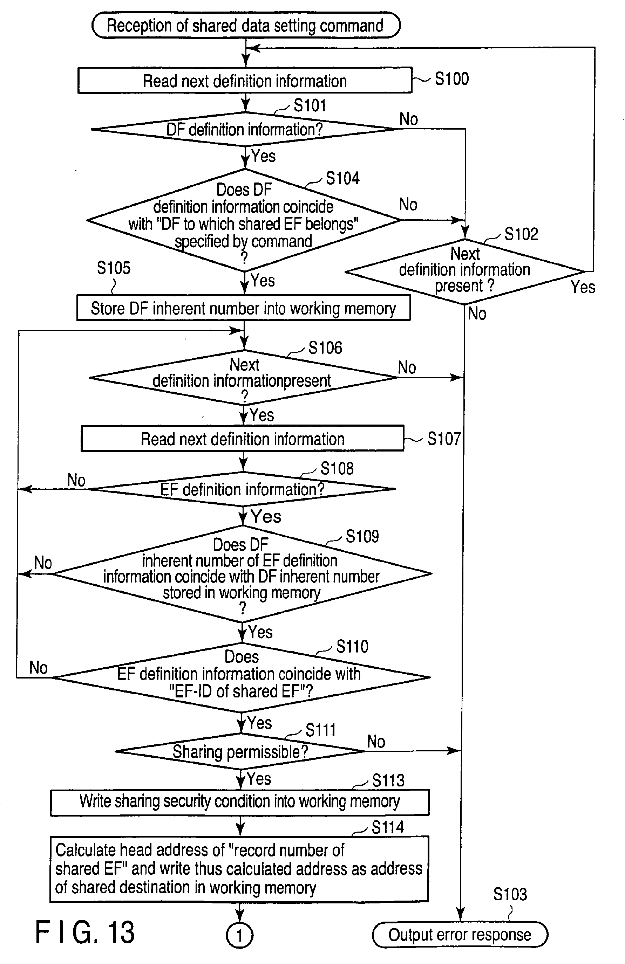

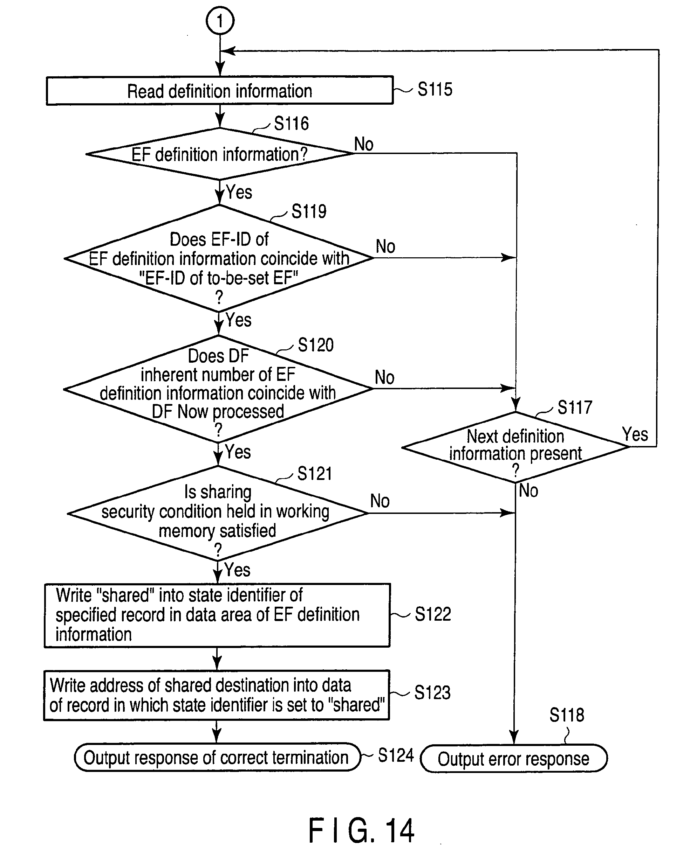

FIGS. 13 and 14 are flowcharts for illustrating the flows of processes (shared data setting processes) when a shared data setting command is received.

It is now assumed that the reader/writer 5 used as the external device supplies a shared data setting command 400 that shares a specified record of a specified EF with a different record to the IC card 1. Then, the IC card 1 receives the shared data setting command 400 via the communication unit 25. The thus received command is supplied to the CPU 21 from the communication unit 25. The CPU 21 determines whether the command is a shared data setting command by use of the CLA portion 402 and INS portion 403 in the command header portion 401 of the command 400.

When determining that the received command is the shared data setting command 400, the CPU 21 performs a process of detecting "DF to which shared EF belongs" specified by the data portion 407 of the shared data setting command 400 (steps S100 to S104). In this case, "DF to which shared EF belongs" is information stored in the data portion 407 of the shared data setting command 400. "DF to which shared EF belongs" is a DF to which an EF used as a data file in which the shared record is stored belongs. In this case, it is assumed that "DF to which shared EF belongs" is specified by a DF name of the DF.

That is, the CPU 21 sequentially reads respective definition information items from the file definition information region 22b shown in FIG. 4 (step S100). If the read definition information is not definition information of the DF (NO in step S101), the CPU 21 determines whether next definition information is present or not (step S102). If it is determined in the above determination step that the next definition information is present (YES in step S102), the CPU 21 returns the process to step S100 and reads next definition information. If it is determined that the next definition information is not present (NO in step S102), the CPU 21 transmits an error response indicating that an error has occurred in the shared data setting process to the reader/writer 5 (step S103) and terminates the present process.

If the read definition information is definition information of the DF (YES in step S101), the CPU 21 determines whether or not the DF defined by the above definition information is "DF to which shared EF belongs" specified by the data portion 407 of the shared data setting command 400 (step S104). In this case, it is assumed that "DF to which shared EF belongs" is specified by the DF name. Therefore, the CPU 21 determines whether or not the DF name in the read DF definition information coincides with the DF name of "DF to which shared EF belongs" specified by the command 400.

If it is determined in the above determination step that the DF of the read DF definition information is not the DF of "DF to which shared EF belongs" (NO in step S104), the CPU 21 returns the process to step S102 and detects next definition information.

If it is determined in the above determination step that the DF of the read DF definition information is the DF of "DF to which shared EF belongs" (YES in step S104), the CPU 21 performs a process of storing the DF inherent number of the DF in the working memory 23 (step S105). That is, the CPU 21 extracts the DF inherent number of the read DF definition information. When extracting the DF inherent number, the CPU 21 holds the DF inherent number as identification information indicating "DF to which shared EF belongs" in the working memory 23.

When the DF inherent number of "DF to which shared EF belongs" is stored in the working memory 23, the CPU 21 determines whether or not next definition information is present in the file definition information region 22b shown in FIG. 4 (step S106). If it is determined that next definition information is not present (NO in step S106), the CPU 21 transmits an error response indicating that an error has occurred in the shared data setting process to the reader/writer 5 (step S103) and terminates the process. Further, if it is determined that next definition information is present (YES in step S106), the CPU 21 reads the next definition information (step S107). If the next definition information is read in step S107, the CPU 21 determines whether or not the read definition information is EF definition information (step S108).

If it is determined that the read definition information is EF definition information (YES in step S108), the CPU 21 determines whether or not the DF inherent number indicating a DF to which an EF defined by the EF definition information belongs coincides with the DF inherent number stored in the working memory 23 in step S105 (step S109). If it is determined in the above determination step that the DF inherent number in the read EF definition information does not coincide with the DF inherent number stored in the working memory 23 (NO in step S109), the CPU 21 returns the process to step S106 and detects next definition information.

In the configuration example of the definition information shown in FIG. 4, an EF belonging to each DF is written following after the DF definition information of the DF to which it belongs. In this case, it is considered that EF definition information lying between the DF definition information specified in step S104 and next DF definition information is a desired EF. With the above configuration, if it is determined in step S108 that the read definition information is not EF definition information or if it is determined in step S109 that the DF inherent numbers do not coincide with each other, the CPU 21 may advance the process to step S103 and process an error process to indicate that a desired EF could not be detected.

If it is determined in the above determination step that the DF inherent number in the read EF definition information coincides with the DF inherent number stored in the working memory 23 (YES in step S109), the CPU 21 determines whether or not EF-ID of the EF definition information coincides with "EF-ID of shared EF" specified by the above command (step S110). If it is determined in the above determination step that EF-IDs do not coincide with each other (NO in step S110), the CPU 21 returns the process to step S106 and detects next definition information.

If it is determined in the above determination step that EF-ID of the read EF definition information coincides with "EF-ID of shared EF" specified by the above command, the CPU 21 determines whether sharing is permitted or not based on the read EF definition information (step S111). That is, the CPU 21 determines whether sharing is permissible or not according to whether the sharing permitting information portion 208 in the read EF definition information permits sharing or not (step S113). If it is determined in the above determination step that sharing cannot be permitted (NO in step S111), the CPU 21 advance the process to step S103, outputs an error response to the reader/writer 5 and terminates the process.

If it is determined in the above determination step that sharing can be permitted (YES in step S111), the CPU 21 stores information of the sharing-time security condition information portion 209 in the read EF definition information in the working memory 23 as a sharing security condition (step S113). This is a process of checking whether an EF that will be set later satisfies the sharing security condition with the above EF. When the sharing security condition is stored in the working memory 23, the CPU 21 performs a process of specifying a head address of a shared record (step S114). For example, the CPU 21 calculates a head address of a shared record based on "record number of shared EF" specified by the data portion 407 of the shared data setting command 400 and stores the thus calculated address information in the working memory 23.

In this case, the head address of the shared record is calculated based on the head address of the data area of the EF and the data length of each record. The EF data area can be specified by the head address of the data area of the EF definition information as shown in FIG. 6. Therefore, the head address of each record in the EF data area is calculated by adding the length (data size) of the whole portion of each record lying immediately before the head address of the data area to the head address. The length of the whole portion of one record is equal to the total sum of the lengths of the state identifier 301, data length 302, data portion 303 and file check byte 304. In this case, the lengths of the state identifier 301, data length 302 and file check byte 304 are preset lengths and the length of the data portion 303 is the length indicated by the data length 302.

The above process (steps S100 to S114) is a process of specifying the shared record (record of the shared destination). Therefore, if the process up to step S114 is correctly performed, the CPU 21 performs a process of forming a record (record set to be shared) linked with a record of the shared destination (steps S115 to S124).

That is, when the head address of the shared record is stored in the working memory 23, the CPU 21 performs a process of specifying an EF that stores a record set to be shared in the file definition information region 22b shown in FIG. 4 again (steps S115 to S120). For example, the CPU 21 sequentially reads definition information items from the file definition information region 22b (step S115). When the read definition information is not EF definition information (NO in step S116), the CPU 21 determines whether next definition information is present or not (step S117). If it is determined in the above determination step that next definition information is present (YES in step S117), the CPU 21 returns the process to step S115 and reads the next definition information. Further, if it is determined that next definition information is not present (NO in step S117), the CPU 21 transmits an error response indicating that an error has occurred in the shared data setting process to the reader/writer 5 (step S118) and terminates the process since a to-be-set EF cannot be detected.

If the read definition information is EF definition information (YES in step S116), the CPU 21 determines whether or not the EF defined by the EF definition information is an EF that stores a record set to be shared (step S119). For example, the CPU 21 determines whether or not EF-ID of the EF defined by the EF definition information coincides with "EF-ID of to-be-set EF" specified by the data portion 407 of the shared data setting command 400. If it is determined in the above determination step that the EF defined by the EF definition information does not coincide with the EF that stores the record set to be shared (NO in step S119), the CPU 21 returns the process to step S106 and detects next definition information.

If it is determined in the above determination step that the EF defined by the EF definition information coincides with the EF that stores the record set to be shared (YES in step S119), the CPU 21 determines whether or not a DF to which the EF belongs is a DF that is now processed (step S120). For example, it is assumed that information indicating the DF now processed is held in the working memory 23 as a DF inherent number of the current DF. That is, the CPU 21 determines whether or not the DF inherent number in the EF definition information coincides with the DF inherent number of the current DF stored in the working memory 23. If it is determined in the above determination step that the DF to which the EF belongs is not a DF that is now processed (NO in step S120), the CPU 21 returns the process to step S106 and detects next definition information.

If it is determined in the above determination step that the DF to which the EF belongs is a DF that is now processed (YES in step S120), the CPU 21 determines whether or not the EF defined by the EF definition information satisfies the sharing security condition stored in the working memory 23 (step S121). If it is determined in the above determination step that the EF does not satisfy the sharing security condition (NO in step S121), the CPU 21 transmits an error response indicating that an error has occurred in the shared data setting process due to non-coincidence with the sharing security condition to the reader/writer 5 (step S118) and terminates the process.

If it is determined in the above determination step that the EF satisfies the sharing security condition (YES in step S121), the CPU 21 performs a process of setting a record (record set to be shared) linked with the record of the shared destination in the data area of the EF defined by the EF definition information (steps S122 to S123). Like record R2 shown in FIG. 12, in the record set to be shared, the state identifier 301 becomes "shared" and the data 303 becomes "head address" of the link destination. For example, the record set to be shared is specified by a record number that is specified by the P1 portion of the shared data setting command 400.

Therefore, the CPU 21 writes information indicating "shared" in the state identifier 301 in the record of the record number specified by the command 400 in the data area of the EF defined by the EF definition information (step S122). Further, the CPU 21 writes a head address of the record to be shared (to be linked) to the data 303 of the record in which the state identifier 301 is set to "shared" (step S123). In this case, the head address (shared address) written to the data 303 is address information stored in the working memory 23 in step S114.

If a series of the above processes is correctly completed, the CPU 21 forms response data indicating the correct termination as a response with respect to the shared data setting command 400 and transmits the same to the reader/writer 5 (step S124). When the response data indicating the correct termination is transmitted, the CPU 21 terminates the shared data setting process.

According to the above shared data setting process, a record whose shared destination is set by the head address can be set according to the shared data setting command shown in FIGS. 9 and 10 as indicated by record R2 of FIG. 12.

Next, a process of reading the above record is explained in detail.

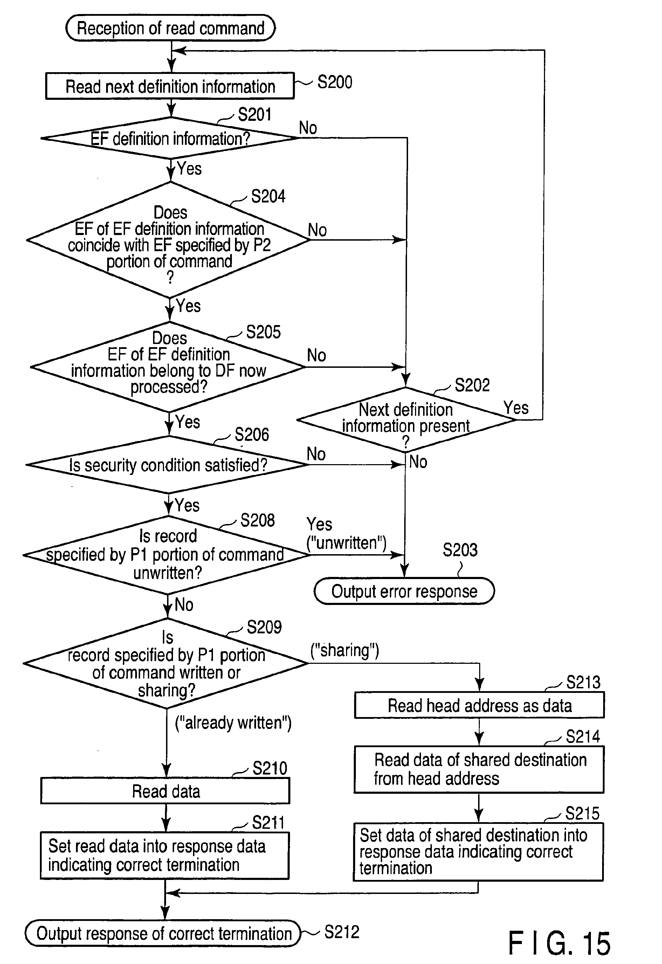

FIG. 15 is a flowchart for illustrating the flow of a process (read process) when the IC card 1 receives a read command.

First, it is assumed that the reader/writer 5 used as the external device supplies a read command that requests reading of a specified record to the IC card 1. Then, the IC card 1 performs a process of reading data corresponding to the read command from the reader/writer 5.

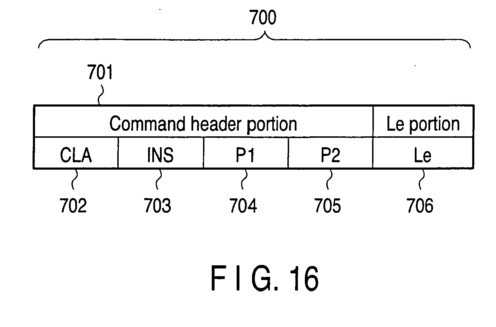

FIG. 16 shows an example of a read command 700. As shown in FIG. 16, the read command 700 includes a command header portion 701 and Le portion 706. The command header portion 701 is configured by a CLA portion 702, INS portion 703, P1 portion 704 and P2 portion 705. Information indicating that the command is a read command is stored in the CLA portion 702 and INS portion 703. The P1 portion 704 and P2 portion 705 are information indicating parameters of the read command. In this example, it is assumed that EF-ID indicating an EF as a data file that stores a record to be read is stored in the P1 portion 704. Further, it is assumed that a record number indicating a record to be read is stored in the P2 portion 705.

When receiving the read command 700 via the communication unit 25, the CPU 21 determines whether the command is a read command by use of the CLA portion 702 and INS portion 703 in the command header portion 701 of the command 700. If it is determined that the received command is the read command 700, the CPU 21 performs a process of detecting a to-be-read EF specified by the P1 portion 704 of the read command 700 (steps S200 to S204).

That is, the CPU 21 sequentially reads definition information items from the file definition information region 22b shown in FIG. 4 (step S200). If the read definition information is not EF definition information (NO in step S201), the CPU 21 determines whether next definition information is present or not (step S202). If it is determined in the above determination step that next definition information is present (YES in step S202), the CPU 21 returns the process to step S200 and reads the next definition information. Further, if it is determined that next definition information is not present (NO in step S202), the CPU 21 transmits an error response indicating that an error has occurred in the read process for the read command to the reader/writer 5 (step S203) and terminates the present process.

If the read definition information is EF definition information (YES in step S201), the CPU 21 determines whether the EF defined by the EF definition information is an EF specified by the P2 portion 705 of the read command 700 (step S204). In this case, it is assumed that EF-ID indicating the EF to be specified is stored the P2 portion 705. Then, the CPU 21 determines whether or not EF-ID in the read EF definition information coincides with EF-ID specified by the P2 portion 705 of the command 700.

If it is determined in the above determination step that the EF of the read EF definition information is not the EF specified by the read command 700 (NO in step S204), the CPU 21 returns the process to step S202 and detects next definition information.

Further, if it is determined in the above determination step that the EF of the read EF definition information is the EF specified by the read command 700 (YES in step S204), the CPU 21 determines whether or not a DF to which the EF of the EF definition information belongs is a DF now processed (step S205). For example, it is assumed that information indicating the DF now processed is held as a DF inherent number of the current DF in the working memory 23. In this case, the CPU 21 determines whether or not the DF inherent number in the EF definition information coincides with a DF inherent number of the current DF stored in the working memory 23. If it is determined in the above determination step that the DF to which the EF belongs is not the DF now processed, that is, the EF does not belong to the DF now processed (NO in step S205), the CPU 21 returns the process to step S202 and detects next definition information.

Further, if it is determined in the above determination step that the EF of the EF definition information belongs to the DF now processed (YES in step S205), the CPU 21 determines whether or not the present security state satisfies the security condition of the read EF definition information (step S206). If it is determined in the above determination step that it does not satisfy the security condition (NO in step S206), the CPU 21 transmits an error response indicating that an error has occurred in the read process for the read command to the reader/writer 5 (step S203) and terminates the present process.

Further, if it is determined in the above determination step that it satisfies the security condition (YES in step S206), the CPU 21 performs a read process according to the state for a record specified by the record number stored in the P1 portion 704 of the command 700 (steps S208 to S214). As described previously, each record has three types of states indicated by the state identifier 301. That is, the state identifier 301 of each record indicates one of "unwritten", "already written" and "shared".

When the state identifier of the record specified by the command 700 is "unwritten" (YES ["unwritten"] in step S208), the CPU 21 transmits an error response indicating occurrence of an error to the reader/writer 5 (step S203) and terminates the present process since the to-be-read data is not present.

When the state identifier of the record specified by the command 700 is "already written" ("already written" in step S209), the CPU 21 reads the data 303 of the record specified by the command 700 (step S210). In this case, the CPU 21 forms response data that indicates correct termination and in which read data is set (step S211). When the response data indicating the correct termination is formed, the CPU 21 transmits the thus formed response data indicating the correct termination to the reader/writer 5 (step S212) and terminates the present process.

Further, when the state identifier of the record specified by the command 700 is "shared" ("shared" in step S209), the CPU 21 reads address information as the data 303 of the record specified by the command 700 (step S213). As described previously, the address information is information indicating the head address of a shared destination (link destination) as shared data of the record. Therefore, the CPU 21 reads shared data in which an address read as data of the record is used as the head address (step S214). When the shared data is read, the CPU 21 forms response data that indicates correct termination and in which shared data read from the shared destination is set as read data (step S215).

As a result, if the response data indicating the correct termination is formed, the CPU 21 transmits the thus formed response data indicating the correct termination to the reader/writer 5 (step S212) and terminates the present process.

According to the above data read process, data of a specified record of a shared destination can be read based on the head address of the shared destination written to the data of the record with respect to a read command used to read a record set to be shared.

Next, a data rewrite process for the above record is explained in detail.

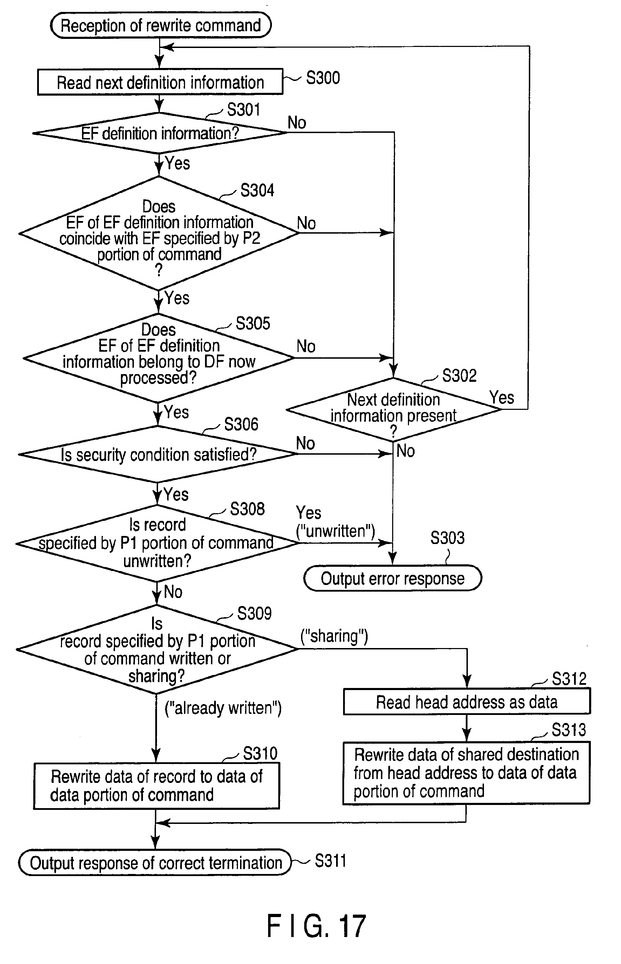

FIG. 17 is a flowchart for illustrating the flow of a process (rewrite process) when the IC card 1 receives a rewrite command.

First, it is assumed that the reader/writer 5 used as the external device supplies a rewrite command that requests a process of rewriting data of a specified record to the IC card 1. Then, the IC card 1 performs a rewrite process corresponding to the rewrite command from the reader/writer 5.

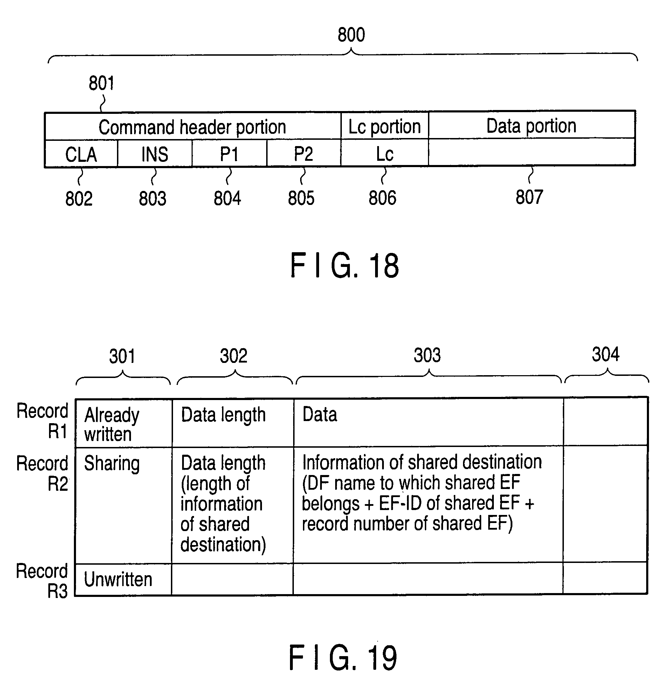

FIG. 18 shows an example of a rewrite command 800. As shown in FIG. 18, the rewrite command 800 includes a command header portion 801, Le portion 806 and data portion 807. The command header portion 801 is configured by a CLA portion 802, INS portion 803, P1 portion 804 and P2 portion 805. In the CLA portion 802 and INS portion 803, information indicating that the command is a rewrite command is stored. The P1 portion 804 and P2 portion 805 are information indicating parameters of the rewrite command. In this example, it is assumed that EF-ID indicating an EF as a data file that stores a to-be-rewritten record is stored in the P1 portion 804. Further, it is assumed that a record number indicating a to-be-rewritten record is stored in the P2 portion 805.

When receiving a rewrite command 800 via the communication unit 25, the CPU 21 determines whether the command is a rewrite command by use of the CLA portion 802 and INS portion 803 in the command header portion 801 of the command 800. If it is determined that the received command is the rewrite command 800, the CPU 21 performs a process of detecting a to-be-rewritten EF specified by the P1 portion 804 of the rewrite command 800 (steps S300 to S304).

That is, the CPU 21 sequentially reads respective definition information items from the file definition information region 22b shown in FIG. 4 (step S300). If the read definition information is not EF definition information (NO in step S301), the CPU 21 determines whether next definition information is present or not (step S302). If it is determined in the above determination step that the next definition information is present (YES in step S302), the CPU 21 returns the process to step S300 and reads next definition information. If it is determined that the next definition information is not present (NO in step S302), the CPU 21 transmits an error response indicating that an error has occurred in the rewrite process for the rewrite command to the reader/writer 5 (step S303) and terminates the present process.

If the read definition information is EF definition information (YES in step S301), the CPU 21 determines whether or not the EF defined by the EF definition information is an EF specified by the P2 portion 805 of the rewrite command 800 (step S304). In this case, it is assumed that EF-ID indicating a specified EF is stored in the P2 portion 805. Therefore, the CPU 21 determines whether or not EF-ID in the read EF definition information coincides with EF-ID specified by the P2 portion 805 of the command 800.

If it is determined in the above determination step that the EF of the read EF definition information is not the EF specified by the rewrite command 800 (NO in step S304), the CPU 21 returns the process to step S302 and detects next definition information.

If it is determined in the above determination step that the EF of the read EF definition information is the EF specified by the rewrite command 800 (YES in step S304), the CPU 21 determines whether or not a DF to which the EF of the EF definition information belongs is a DF now processed (step S305). For example, it is assumed that information indicating the DF now processed is held as a DF inherent number of the current DF in the working memory 23. In this case, the CPU 21 determines whether or not the DF inherent number in the EF definition information coincides with a DF inherent number of the current DF stored in the working memory 23. If it is determined in the above determination step that the DF to which the EF belongs is not a DF now processed, that is, the EF does not belong to the DF now processed, (NO in step S305), the CPU 21 returns the process to step S302 and detects next definition information.

If it is determined in the above determination step that the EF of the read EF definition information belongs to the DF now processed (YES in step S305), the CPU 21 determines whether or not the present security state satisfies the security condition of the read EF definition information (step S306). If it is determined in the above determination step that it does not satisfy the security condition (NO in step S306), the CPU 21 transmits an error response indicating that an error has occurred in the rewrite process for the rewrite command to the reader/writer 5 (step S303) and terminates the present process.

If it is determined in the above determination step that it satisfies the security condition (YES in step S306), the CPU 21 performs a read process according to the state for a record specified by a record number stored in the P1 portion 804 of the command 800 (steps S308 to S314). As described previously, each record has three types of states indicated by the state identifier 301. That is, the state identifier 301 of each record indicates one of "unwritten", "already written" and "shared".

When the state identifier of the record specified by the command 800 is "unwritten" (YES ["unwritten"] in step S308), the CPU 21 transmits an error response indicating occurrence of an error to the reader/writer 5 (step S303) and terminates the present process since to-be-read data is not present.

When the state identifier of the record specified by the command 800 is "already written" ("already written" in step S309), the CPU 21 rewrites the data 303 of the record specified by the command 800 to data stored in the data portion 807 of the command 800 (step S310). If the rewrite process is correctly terminated, the CPU 21 transmits a response indicating correct termination to the reader/writer 5 (step S311) and terminates the process.

Further, when the state identifier of the record specified by the command 800 is "shared" ("shared" in step S309), the CPU 21 reads address information as the data 303 of the record specified by the command 800 (step S312). As described previously, the address information is information indicating the head address of a shared destination (link destination) as shared data of the record. Therefore, the CPU 21 rewrites shared data having an address read as the head address and used as data of the record to data stored in the data portion 807 of the command 800 (step S313). If the rewrite process for data of the shared destination is correctly terminated, the CPU 21 transmits a response indicating correct termination to the reader/writer 5 (step S311) and terminates the process.

According to the above data rewrite process, in response to a rewrite command used to rewrite a record set to be shared, data of the specified record of the shared destination can be rewritten to data specified by the command based on the head address of the shared destination written to the data of the record.

Next, a modification of the above embodiment is explained.

The above process of setting shared data is not limited to the method for specifying the shared destination by using an address and any method can be used if it can specify the shared destination. For example, the shared destination can be specified by a DF name (or DF inherent number), EF-ID and record number. In the method for specifying the shared destination by using an address, the shared destination can be directly specified by using an address. Therefore, it is considered that an access speed is high. That is, since the shared destination is directly specified by using an address, it is not considered that the process time becomes longer even if the state identifier of the record is "shared".

On the other hand, in a method for specifying a record of a shared destination by using a DF name, EF-ID and record number, it is not necessary to calculate an address of the shared destination at the sharing setting time. Further, in the method for specifying the record of the shared destination by using the DF name, EF-ID and record number, it is not necessary to re-set information indicating a record of the shared destination even if the address of the shared destination is changed. That is, in the method for specifying the record of the shared destination by using the DF name, EF-ID and record number, it is considered that the process of setting sharing for a record can be easily performed and the degree of freedom in the operation can be made high.

Generally, the data memory management technique is a technique for optimizing a memory area of the data memory. The memory management technique continuously links memory areas that become unavailable or memory areas lying in gaps between various data items and reconstructs an available memory area. As a result, in the memory management technique, the arrangement of various data items on the memory may be frequently reset. That is, in the memory management technique, addresses of the memory in which various data items are stored may be frequently changed. Therefore, data used to refer to addresses on the memory must be updated at the same time as data reconstruction (optimization) in the memory area.

For example, a programming language called Java (registered trademark) is provided as a programming language applied to the IC card 1. In Java, a function called garbage collection is provided as a function of the memory management. Garbage collection is a technique for increasing the area of an available continuous memory area formed by collecting memory areas that are not used any longer by the program and memory areas lying in gaps between the programs. The Java virtual machine (JVM) itself has a garbage collection function so that the Java programmer will not be required to pay any attention to the memory management.

That is, In a IC card having a memory management function for optimizing data such as the garbage collection, it is necessary to recalculate an address of a shared destination each time data is optimized if a method for directly specifying an address of the shared destination is applied. As a result, it takes a long time to perform the data optimization process itself or the address data re-setting process accompanied by the data optimization. On the other hand, in a IC card to which a method for specifying a record of a shared destination by using a DF name, EF-ID and record number is applied, the time required for performing the data optimization process or the data re-setting process accompanied by the data optimization can be reduced.

Next, a method for specifying the shared destination by using "DF name", "EF-ID" and "record number" is explained.

FIG. 19 shows an example of the configuration of a record when the shared destination is specified by using "DF name", "EF-ID" and "record number". In this example, it is assumed that information configured by "DF name", "EF-ID" and "record number" indicating the shared destination is used as shared destination information.

Data of a record other than a record in which a state identifier shown in FIG. 19 is "shared" may be kept unchanged to have the configuration shown in FIGS. 1 to 11, for example. In the record in which the state identifier is "shared", shared destination information ("DF name", "EF-ID" and "record number") is written as data 303 and information indicting the length of the shared destination information as the data 303 is written as data length 302 as shown in a record R2 shown in FIG. 19.

Next, various processes performed when the shared destination is specified by the shared destination information are explained.

First, a shared data setting process performed when the shared destination is specified by the shared destination information is explained.

In the shared data setting process, when the shared destination is specified by the shared destination information, the process of step S114 in the process shown in FIGS. 13 and 14 is omitted and the process of step S123 is changed to a process of writing shared destination information to data of a record in which the state identifier is set to "shared".

The shared destination information is "DF name to which shared EF belongs" 502, "EF-ID of shared EF" 503 and "shared record number" 504 in the data portion 407 of the shared data setting command 400 as shown in FIG. 10. This means that "DF name", "EF-ID" and "record number" in the data portion 407 of a received command are written as data of the record in the shared data setting process. That is, when the shared destination is specified by the shared destination information, address calculation can be made unnecessary in the shared data setting process and it is only required to write part of the data portion of the command to data of the record. This means that the shared data setting process is simple.

Next, a read process and rewrite process performed when the shared destination is specified by the shared destination information are explained.

When the shared destination is specified by the shared destination information, it becomes necessary to perform a process of specifying a record of a shared destination based on shared destination information as data of a record in which the state identifier is "shared" in the read process or rewrite process.

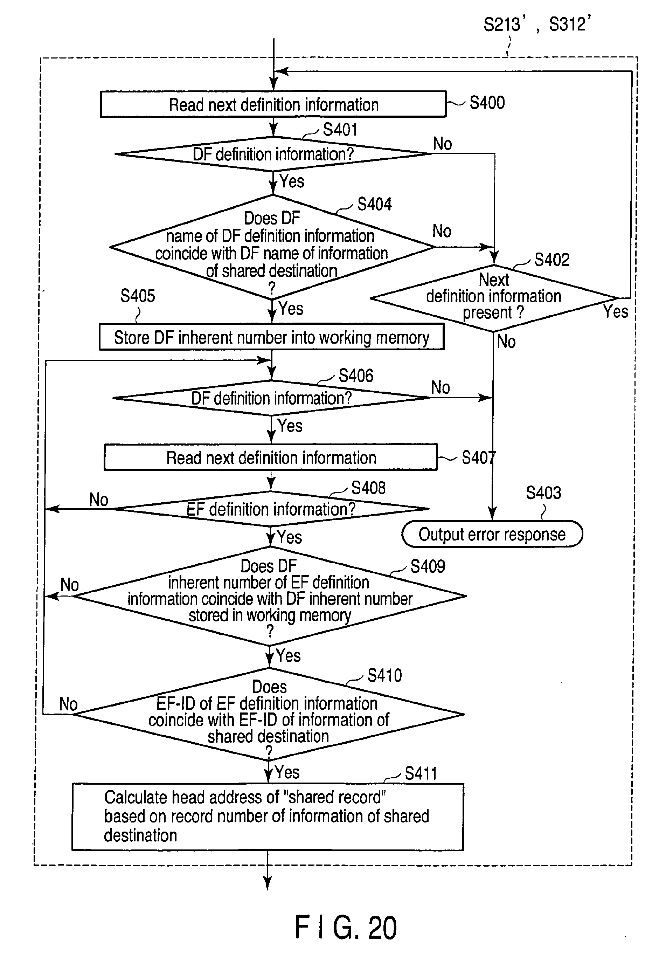

FIG. 20 is a flowchart for illustrating the flow of a process of specifying a record of a shared destination when the state identifier of a to-be-processed record is "shared". That is, the process shown in FIG. 20 is a process performed instead of step S213 in the read process shown in FIG. 15 or step S312 in the rewrite process shown in FIG. 17, for example. The process (steps S400 to S410) shown in FIG. 20 is similar to the process of steps S100 to S110 shown in FIG. 13. However, the process (steps S400 to S411) shown in FIG. 20 is different from the process of steps S100 to S110 shown in FIG. 13 in that a record of a shared destination is specified based on shared destination information.

That is, when the state identifier of a to-be-processed record is "shared", the CPU 21 performs a process of detecting "DF to which shared EF belongs" indicated by the shared destination information as data of the record (steps S400 to S404). It is assumed that "DF to which shared EF belongs" is specified by a DF name. In this case, the CPU 21 sequentially reads definition information items from the file definition information region 22b shown in FIG. 4 (step S400).

If the read definition information is not DF definition information (NO in step S401), the CPU 21 determines whether next definition information is present or not (step S402). If it is determined in the above determination step that next definition information is present (YES in step S402), the CPU 21 returns the process to step S400 and reads the next definition information. Further, if it is determined that next definition information is not present (NO in step S402), the CPU 21 transmits an error response indicating that an error has occurred in the above process to the reader/writer 5 (step S403) and terminates the process.

If the read definition information is DF definition information (YES in step S401), the CPU 21 determines whether or not the DF name defined by the above DF definition information coincides with "DF name to which shared EF belongs" specified by the shared destination information (step S404). If it is determined in the above determination step that the DF name of the read DF definition information does not coincide with the DF name of the shared destination information (NO in step S404), the CPU 21 returns the process to step S402 and detects next definition information.

If it is determined in the above determination step that the DF name of the read DF definition information coincides with the DF name of the shared destination information (YES in step S404), the CPU 21 stores a DF inherent number of the DF definition information in the working memory 23 (step S405). When the DF inherent number is stored in the working memory 23, the CPU 21 determines whether or not next definition information is present in the file definition information region 22b shown in FIG. 4 (step S406). If it is determined that next definition information is not present (NO in step S406), the CPU 21 transmits an error response indicating that an error has occurred in the process to the reader/writer 5 (step S403) and terminates the process.

Further, if it is determined that next definition information is present (YES in step S406), the CPU 21 reads next definition information (step S407). If the next definition information is read in step S407, the CPU 21 determines whether or not the read definition information is EF definition information (step S408). If it is determined that the read definition information is EF definition information (YES in step S408), the CPU 21 determines whether or not a DF inherent number indicating a DF to which an EF defined by the EF definition information belongs coincides with the DF inherent number stored in the working memory 23 in step S405 (step S409). If it is determined in the above determination step that the DF inherent number in the read EF definition information does not coincide with the DF inherent number stored in the working memory 23 (NO in step S409), the CPU 21 returns the process to step S406 and detects next definition information.

If it is determined in the above determination step that the DF inherent number in the read EF definition information coincides with the DF inherent number stored in the working memory 23 (YES in step S409), the CPU 21 determines whether or not EF-ID of the EF definition information coincides with "EF-ID of shared EF" in the shared destination information (step S410). If it is determined in the above determination step that EF-IDs do not coincide with each other (NO in step S410), the CPU 21 returns the process to step S406 and detects next definition information.

If it is determined in the above determination step that EF-ID of the read EF definition information coincides with EF-ID in the shared destination information (YES in step S410), the CPU 21 performs a process of specifying a head address of a record of the shared destination (step S411). For example, the CPU 21 calculates a head address of a record shared based on "shared record number" specified by the shared destination information.

In this case, the head address of the record of the shared destination is calculated based on the head address of the EF data area and data length of each record. The EF data area can be specified by the head address of the data area of the EF definition information shown in FIG. 6. Therefore, the head address of each record in the EF data area is calculated by adding the length (data size) of the whole portion of each record lying directly before the data area to the head address of the data area. The whole length of one record is equal to the total sum of the lengths of the state identifier 301, data length 302, data portion 303 and file check byte 304. In this case, the lengths of the state identifier 301, data length 302 and file check byte 304 are preset lengths and the length of the data portion 303 is the length indicated by the data length 302.

According to the above processes, the head address of the record of the shared destination specified by the shared destination information can be specified and a data read or rewrite process can be performed. As described above, setting of sharing of a record can be made even if the shared destination information is used. If there is a possibility that the address of the shared destination may be changed, the efficient memory management can be realized by making the setting of sharing of the record by using the above shared destination information.

As described above, the IC card according to this embodiment has the data memory that stores data files in which data is stored in the record unit. When receiving a command that requests access to the specified record stored in the data memory from the reader/writer, the IC card determines whether or not the record that is requested to be accessed is shared data. If it is determined in the above determination step that the record specified by the above command is shared data, access is made to data of the shared destination specified by the data of the record as the data of the record. As a result, in the IC card according to the above embodiment, the management of data in the record unit stored in the data memory can be efficiently performed.

## Claims

1. A portable electronic device (1) **characterized by** comprising:
a storage unit (20) which stores a data file having data of a record unit stored therein,
a communication unit (25) which communicates data with an external device (5),
a determination unit (21, S209, S309) which determines whether a record that is requested to be accessed is shared data when a command that requests access to a specified record is received via the communication unit, and
a processing unit (21, S212-S215, S311-S313) which accesses data of a shared destination of the record based on information indicating the shared destination as data of the record when the determination unit determines that the record specified by the command is shared data.

2. The portable electronic device (1) according to claim 1, **characterized in that** the storage unit (20) stores a state identifier indicating whether each record stored in the data file is shared data and the determination unit (21, S209, S309) determines whether the record specified by the command is shared data by using the state identifier.

3. The portable electronic device (1) according to one of claims 1 and 2, **characterized by** further comprising a sharing setting unit (21, S123) which writes information indicating a shared destination to data of a specified record when a command that requests setting of shared data in the specified record is received via the communication unit (25).

4. The portable electronic device (1) according to claim 3, **characterized in that** the sharing setting unit (21, S123) writes address information of a record of the shared destination as information indicating the shared destination to data of the specified record.

5. The portable electronic device (1) according to claim 3, **characterized in that** the sharing setting unit (21, S122-S123) writes information indicating the data file that stores a record of the shared destination and record identification information in the data file as information indicating the shared destination to data of the specified record.

6. The portable electronic device (1) according to any one of claims 1 to 5, **characterized in that** the processing unit (21, S212-S215) performs a process of reading data of a shared destination and transmitting the read data as data of a record specified by a command that requests reading to the external device (5) when the determination unit (21, S209) determines that the record is shared data.

7. The portable electronic device (1) according to any one of claims 1 to 5, **characterized in that** the processing unit (21, S311-S313) performs a process of rewriting data of a shared destination to data specified by a command that requests rewriting when the determination unit (21, S309) determines that the record specified by the command that requests rewriting is shared data.

8. The portable electronic device (1) according to any one of claims 1 to 7, **characterized by** further comprising a module (M) which includes the above units, and a main body (B) in that the module is embedded.

9. A data processing method in a portable electronic device (1) which includes a storage unit (22) which stores data, a communication unit (25) which communicates data with an external device (5) and a control unit (21) which performs a data process, **characterized by** comprising:
storing a data file having data of a record unit stored therein in the storage unit,
determining (S209, S309) whether a record that is requested to be accessed is shared data when a command that requests access to a specified record is received via the communication unit, and
accessing (S212-S215, S311-S313) data of a shared destination of a record based on information indicating the shared destination as data of the record when it is determined in the above determination step that the record specified by the command is shared data.

10. The data processing method in the portable electronic device (1) according to claim 9, **characterized in that** a state identifier indicating whether each record stored in the data file is shared data is stored in the storage unit (22) and the above determination (S209, S309) determines whether the record specified by the command is shared data by using the state identifier.

11. The data processing method in the portable electronic device (1) according to one of claims 9 and 10, **characterized by** further comprising writing (S123) information indicating a shared destination to data of a specified record when a command that requests setting of shared data in the specified record is received via the communication unit (25).

12. The data processing method in the portable electronic device (1) according to one of claims 9 and 10, **characterized by** further comprising writing (S123) address information of a record of a shared destination as information indicating the shared destination to data of a specified record when a command that requests setting of shared data in the specified record is received via the communication unit.

13. The data processing method in the portable electronic device (1) according to one of claims 9 and 10, **characterized by** further comprising writing (S122-S123) information indicating a data file in that a record of a shared destination is stored and record identification information in the data file as information indicating the shared destination to data of the specified record when a command that requests setting of the shared data in the specified record is received via the communication unit.

14. The data processing method in the portable electronic device (1) according to any one of claims 9 to 13, **characterized in that** the process (S212-S215) is a process of reading data of a shared destination and transmitting the read data as data of a record specified by a command that requests reading to the external device when it is determined in the above determination step that the record is shared data.

15. The data processing method in the portable electronic device (1) according to any one of claims 9 to 13, **characterized in that** the process (S311-S313) is a process of rewriting data of a shared destination to data specified by a command that requests rewriting when it is determined in the above determination step that the record specified by the command that requests rewriting is shared data.
